(19) Europäisches Patentamt / European Patent Office / Office européen des brevets

(11) **EP 3 026 403 B1**

(12) **EUROPÄISCHE PATENTSCHRIFT**

(45) Veröffentlichungstag und Bekanntmachung des Hinweises auf die Patenterteilung:
**17.07.2019 Patentblatt 2019/29**

(51) Int Cl.:
***G01F 1/716*** *(2006.01)*  ***G01F 1/74*** *(2006.01)*

(21) Anmeldenummer: **15192006.3**

(22) Anmeldetag: **29.10.2015**

(54) **VERFAHREN ZUM BETREIBEN EINES KERNMAGNETISCHEN DURCHFLUSSMESSGERÄTS**

METHOD FOR OPERATING A NUCLEAR MAGNETIC FLOW METER

PROCÉDÉ DE FONCTIONNEMENT D'UN DÉBITMÈTRE A NOYAU MAGNÉTIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **27.11.2014 DE 102014017494**
**27.04.2015 DE 102015005300**

(43) Veröffentlichungstag der Anmeldung:
**01.06.2016 Patentblatt 2016/22**

(73) Patentinhaber: **Krohne AG**
**4019 Basel (CH)**

(72) Erfinder:
• **Tromp, Rutger Reinout**
**3311 EM Dordrecht (NL)**
• **Zoeteweij, Marco Leendert**
**3344 EP Hendrik-Ido-Ambach (NL)**

(74) Vertreter: **Gesthuysen Patent- und Rechtsanwälte Patentanwälte**
**Huyssenallee 100**
**45128 Essen (DE)**

(56) Entgegenhaltungen:
**EP-A1- 0 126 381      WO-A2-98/59220**
**DE-A1-102004 043 151      US-A1- 2008 174 313**

EP 3 026 403 B1

**Beschreibung**

Die Erfindung betrifft ein Verfahren zum Betreiben eines kernmagnetischen Durchflussmessgerätes zur Bestimmung des Durchflusses eines durch ein Messrohr strömenden mehrphasigen Mediums, mit einer Vormagnetisierungseinrichtung zur Vormagnetisierung des Mediums, mit einer Magnetfelderzeugungseinrichtung zur Erzeugung eines das Medium durchsetzenden Magnetfeldes und mit einer Messeinrichtung, wobei die Messeinrichtung mindestens eine zum Erzeugen von das Medium anregenden Anregungssignalen und/oder zum Detektieren von vom Medium ausgesandten Messsignalen ausgestaltete spulenförmig ausgebildete Antenne umfasst.

Aus dem Stand der Technik ist aus der US 2008/174313 A1 ein Verfahren zum Betreiben eines kernmagnetischen Durchflussmessgerätes gemäß der Präambel des unabhängigen Patentanspruchs 1 bekannt.

Kernmagnetische Durchflussmessgeräte sind zur Bestimmung des Durchflusses eines durch ein Messrohr strömenden Mediums ausgebildet. Hierbei kann das Medium eine Phase oder mehrere Phasen beinhalten. Bei einem einphasigen Medium erfolgt die Bestimmung des Durchflusses durch die Bestimmung der Strömungsgeschwindigkeit des Mediums. Die Bestimmung des Durchflusses eines mehrphasigen Mediums umfasst neben der Bestimmung der Strömungsgeschwindigkeit auch die Bestimmung der relativen Anteile der einzelnen Phasen an dem Medium.

Eine Grundvoraussetzung für die Anwendbarkeit kernmagnetischer Messmethoden ist, dass das Medium oder jede Phase des Mediums Atomkerne mit magnetischen Momenten aufweist. Befindet sich ein aus ein magnetisches Moment tragenden Atomkernen bestehendes System in einem externen, eine bestimmt Richtung aufweisenden Magnetfeld, so richten sich die magnetischen Momente der Atomkerne in dem externen Magnetfeld aus. Die magnetischen Momente nehmen dabei einen Zustand parallel oder antiparallel zu dem äußeren Magnetfeld ein, wobei der Zustand parallel zum äußeren Magnetfeld mit einer höheren Wahrscheinlichkeit besetzt wird, so dass sich in dem System eine "Netto-Magnetisierung" parallel zum äußeren Feld ausbildet. Diese "Netto-Magnetisierung" wird auch als Gleichgewichtsmagnetisierung bezeichnet. Durch einen äußeren Störeinfluss kann die Magnetisierung aus ihrer Gleichgewichtslage ausgelenkt werden. Sobald der Störeinfluss wegfällt, ist die Magnetisierung bestrebt, ihre Gleichgewichtslage wieder einzunehmen, also wieder in ihre Gleichgewichtslage zu relaxieren. Sowohl die magnetischen Momente als auch das äußere Magnetfeld sind durch Vektoren beschreibbar. Bei dem Relaxationsprozess präzedieren die Vektoren der magnetischen Momente um den Vektor des makroskopischen Magnetfeldes. Die Frequenz der Präzession wird als Larmorfrequenz $\omega_L$ bezeichnet und ist dem Betrag der Magnetfeldstärke $B$ proportional. Die Larmorfrequenz wird gemäß $\omega_L = \gamma \cdot B$ berechnet. Darin ist $\gamma$ das gyromagnetische Verhältnis, welches für Wasserstoffatome maximal ist. Das gyromagnetische Verhältnis gibt den Proportionalitätsfaktor zwischen dem Drehimpuls bzw. dem Spin eines Teilchens und dem dazugehörigen magnetischen Moment an.

Eine weitere Voraussetzung für die Bestimmung des Durchflusses eines strömenden Mediums, insbesondere für die Bestimmung der Anteile einzelner Phasen an einem mehrphasigen Medium, ist, dass die einzelnen Phasen des Mediums zu unterschiedlichen kernmagnetischen Resonanzen angeregt werden können.

Kernmagnetische Durchflussmessgeräte der in Rede stehenden Art finden besonderen Einsatz bei der Analyse von aus Ölquellen geförderten Medien. Das Medium besteht dann im Wesentlichen aus den Phasen Rohöl, Erdgas und Salzwasser. Alle Phasen beinhalten Wasserstoffatomkerne und lassen sich demnach zu kernmagnetischer Resonanz anregen.

Als Ausgangsgröße für die Charakterisierung des Mediums werden die von den präzedierenden magnetischen Momenten der Atomkernen nach Anregungen in einer spulenförmig ausgebildeten Antenne induzierten Signale verwendet. Voraussetzung für die Messung eines mehrphasigen Mediums ist, wie bereits ausgeführt, dass die einzelnen Phasen des Mediums zu unterscheidbaren kernmagnetischen Resonanzen angeregt werden können. Die Größe der von den präzedierenden Atomkernen einer Phase des Mediums in der spulenförmig ausgebildeten Antenne induzierten elektrischen Signale ist abhängig von der Anzahl der präzedierenden Atomkerne pro Volumenelement in der Phase, demnach also abhängig von der Dichte der Phase. Bei einem Vergleich der durchschnittlichen Werte der Signalamplituden pro Kubikmeter von Gas, Öl und Wasser lässt sich feststellen, dass sich das Signal von Gas deutlich von dem von Öl und Wasser unterscheidet. Die Stärke der Signale kann durch den sogenannten Wasserstoffindex $HI$ ausgedrückt werden. Der Wasserstoffindex $HI$ beschreibt den relativen Anteil von Wasserstoffatomen eines Mediums im Vergleich zu Wasser. Demnach ist der Wasserstoffindex von Wasser $HI_{Wasser} = 1$. Für die Indizes von Öl und Gas gilt $HI_{Öl} = 0,9 - 1,1$ und $HI_{Gas} = 0 - 0,2$. Folglich ist die Größe der induzierten elektrischen Signale bei den flüssigen Phasen deutlich größer als bei der gasförmigen Phase.

Die Größe des von dem präzedierenden Atomkern einer Phase induzierten elektrischen Signals ist jedoch nicht nur abhängig von der Anzahl der präzedierenden Atomkerne pro Volumenelement, sondern zusätzlich abhängig von der Verweildauer der Atomkerne in dem externen Magnetfeld. Dies lässt sich ganz einfach dadurch erklären, dass die Magnetisierung bei einer längeren Verweildauer mehr Zeit hat, sich aufzubauen.

Das aus den Ölquellen geförderte, durch das Messrohr des Durchflussmessgerätes strömende Medium kann verschiedene Strömungscharakteristiken aufweisen. Das bedeutet, dass die einzelnen Phasen des Mediums über den Messrohrquerschnitt gesehen verschieden verteilt sein können. Insbesondere ist denkbar, dass das Medium eine sogenannte Schichtströmung aufweist. Die Schichtströmung ist dadurch charakterisiert, dass die einzelnen Phasen des Mediums schichtförmig durch das Messrohr strömen. Die gasförmige Phase des Mediums befindet sich hierbei im oberen Teil des Messrohres, die flüssigen Phasen des Mediums, also die Ölphase und die Wasserphase, befinden sich im unteren Teil des Messrohres. Nicht selten kommt es vor, dass die Strömungsgeschwindigkeiten der einzelnen Phasen des Mediums nicht identisch sind. Das Strömungsprofil weist dann eine maximale Strömungsgeschwindigkeit $v_{max}$ und eine minimale Strömungsgeschwindigkeit $v_{min}$ auf. Unterschiedliche Strömungsgeschwindigkeiten können zu sogenanntem "phase slip" führen, dem "Überholen" einer langsamer strömenden Phase durch eine schneller strömende Phase. Unvorteilhafterweise wirkt sich der Effekt des "phase slip" negativ auf die Durchflussmessungen aus, wie im Folgenden erläutert werden soll:

Gegeben sei ein durch ein Messrohr strömendes mehrphasiges Medium mit einer gasförmigen und mit einer flüssigen Phase. Die gasförmige Phase habe die Strömungsgeschwindigkeit $v_1$, die flüssige Phase die Strömungsgeschwindigkeit $v_2$, wobei $v_1 > v_2$. Ferner sei das Messrohr über eine konstante Strecke der Länge $L$ mit einem Magnetfeld durchsetzt. Das Magnetfeld weise mindestens eine Komponente senkrecht zur Strömungsrichtung des Mediums auf. Zudem weise das Medium eine Schichtströmungscharakteristik auf. Wie zuvor ausgeführt, ist die sich in der jeweiligen Phase des Mediums ausbildende Magnetisierung abhängig von der Verweildauer des Mediums bzw. der Phase in dem Magnetfeld. Die mit der Strömungsgeschwindigkeit $v_1$ durch die mit dem Magnetfeld durchsetzte Strecke $L$ strömende gasförmige Phase verweilt demnach eine Dauer $t_1$ in dem Magnetfeld, die mit der Strömungsgeschwindigkeit $v_2$ durch die mit dem Magnetfeld durchsetzte Strecke $L$ strömende flüssige Phase verweilt eine Dauer $t_2$ in dem Magnetfeld. Da die Strömungsgeschwindigkeit der gasförmigen Phase größer ist als die Strömungsgeschwindigkeit der flüssigen Phase, ist die Verweildauer der flüssigen Phase in dem Magnetfeld größer als die Verweildauer der gasförmigen Phase. Das führt dazu, dass sich in der flüssigen Phase eine größere Magnetisierung ausbilden kann als in der gasförmigen Phase. Das Messsignal der flüssigen Phase ist demnach schon aufgrund der Verweildauer in dem Magnetfeld größer als das der gasförmigen Phase.

Zuvor wurde schon gesagt, dass die Stärke des Messsignals abhängig ist von der Dichte bzw. dem Wasserstoffindex der jeweiligen Phase. Es wurde also ausgeführt, dass das Messsignal für die gasförmige Phase, die einen kleinen Wasserstoffindex aufweist, geringer ist als das Messsignal der flüssigen Phase, die einen höheren Wasserstoffindex aufweist, insbesondere einen Wasserstoffindex in der Nähe von 1 aufweist.

Die beiden zuvor erläuterten Einflüsse führen insgesamt dazu, dass das Messsignal einer Bulkmessung durch die langsam strömende Phase, also die flüssige Phase, dominiert wird. Die Signalstärke lässt sich ausdrücken durch

$$S \propto HI \left[ 1 - \exp\left( -\frac{L}{v T_1} \right) \right]$$

wobei $HI$ der Wasserstoffindex, $L$ die Länge der mit dem Magnetfeld durchsetzten Strecke, $v$ die Strömungsgeschwindigkeit und $T_1$ die Spin-Gitter-Relaxationszeit ist.

Aufgrund der das Messsignal dominierenden flüssigen Phase gestaltet sich die Charakterisierung der gasförmigen Phase als kompliziert und aufwendig und führt bei aus dem Stand der Technik bekannten Verfahren meist zu relativ ungenauen Ergebnissen.

Die Aufgabe der Erfindung ist demnach die Angabe eines Verfahrens zum Betreiben eines kernmagnetischen Durchflussmessgerätes, das sich insbesondere für die Anwendung von "phase slip" aufweisenden Medien eignet, mit dem die Charakterisierung der gasförmigen Phase vereinfacht wird.

Die Aufgabe ist zunächst und im Wesentlichen dadurch gelöst, dass von der spulenförmig ausgebildeten Antenne ein die Magnetisierung zumindest in Richtung des Magnetfeldes zerstörender Puls oder eine die Magnetisierung in Richtung des Magnetfeldes zerstörende Pulssequenz ausgesendet wird, insbesondere in Kombination mit Dephasierungsgradienten, dass eine Wartezeit $t_W$ gewartet wird und dass dann eine kernmagnetische Messung durchgeführt wird, indem das Medium durch die spulenförmig ausgebildete Antenne mit Anregungspulsen angeregt wird und die durch die Anregung im Medium erzeugten Messsignale detektiert werden.

Durch den die Magnetisierung zumindest in Richtung des Magnetfeldes zerstörenden Puls oder die die Magnetisierung in Richtung des Magnetfeldes zerstörende Pulssequenz, im Folgenden zusammenfassend als "Zerstörungspuls" bezeichnet, wird erreicht, dass die Magnetisierung des Mediums über den Bereich der Länge der spulenförmig ausgebildeten Antenne zerstört wird, demnach also dieser Teil des Mediums für die anschließende Messung "unbrauchbar" wird. In der Wartezeit $t_W$, die vor der kernmagnetischen Messung gewartet wird, strömt das Medium in dem Messrohr weiter. Die Stecke, die jede der beiden Phasen, also die flüssige Phase und die gasförmige Phase, zurücklegt, bestimmt sich aus dem Produkt der jeweiligen Strömungsgeschwindigkeit $v$ und der Wartezeit $t_W$. Die Strecke, die die gasförmige Phase demnach zurücklegt, ist größer als die Strecke, die die flüssige Phase zurücklegt. Das führt dazu, dass der Teil des Mediums, in dem die Magnetisierung zuvor zerstört wurde, je nach Phase unterschiedlich schnell aus dem Bereich der Erstreckung der spulenförmig ausgebildeten Antenne hinausströmt. Damit geht unmittelbar einher, dass für jede Phase ein unterschiedlicher Volumenanteil "frischen" Mediums in den Bereich der spulenförmig ausgebildeten Antenne nachfließt. Dieser Bereich mit "frischem" Medium weist wieder eine bestimmte Magnetisierung in Richtung des Magnetfeldes auf, die messbar ist. Da der relative Anteil frischen gasförmigen Mediums aufgrund der höheren Strömungsgeschwindigkeit größer ist, als der relative Anteil frischen flüssigen Mediums, wird so eine Verstärkung des von dem gasförmigen Medium erzeugten Anteil am Messsignal bewirkt, beziehungsweise eine Abschwächung des von dem flüssigen Medium erzeugten Anteil am Messsignal.

Eine besondere Ausführungsform des erfindungsgemäßen Verfahrens ist dadurch gekennzeichnet, dass der die Magnetisierung zerstörende Puls durch einen P90-Puls realisiert wird, insbesondere gefolgt von einem Dephasierungsgradientenpuls. Denkbar ist jedoch auch jeder andere Puls oder jede andere Pulssequenz, mit der die Magnetisierung in Richtung des Magnetfeldes zerstört werden kann. Demnach ist das erfindungsgemäße Verfahren nicht auf die Verwendung eines P90-Pulses als Zerstörungspuls beschränkt.

Das erfindungsgemäße Verfahren ist dadurch gekennzeichnet, dass die Wartezeit $t_W$ gegeben ist durch

$$t_W \geq \frac{L_1}{v_{Gas}}$$

wobei $L_1$ die Länge der spulenförmig ausgebildeten Antenne und $v_{Gas}$ die Strömungsgeschwindigkeit der gasförmigen Phase ist.

Wie bereits ausgeführt wurde, strömt das Medium nach der Zerstörung der Magnetisierung in Richtung des Magnetfeldes durch den Zerstörungspuls in dem Messrohr weiter. Die Zeit, die die gasförmige Phase des Mediums benötigt, um die gesamte die Länge $L_1$ der spulenförmig ausgebildeten Antenne umfassende Strecke zurückzulegen, ergibt sich aus der Länge $L_1$, geteilt durch die Strömungsgeschwindigkeit des Gases, $v_{Gas}$. Beträgt die Wartezeit $t_W$ demnach einen größeren Wert, bedeutet das, dass der gesamte "zerstörte Magnetisierung aufweisende" Gasanteil aus der spulenförmig ausgebildeten Antenne herausgeströmt ist und demnach also der Bereich der spulenförmig ausgebildeten Antenne vollständig mit frischem gasförmigen Medium gefüllt ist und maximal mögliches kernmagnetisches Messsignal aussendet. Je länger die Wartezeit beträgt, desto mehr Medium von der flüssigen Phase verlässt die Spule. Demnach wird auch mit zunehmender Wartezeit der Anteil des frischen flüssigen Mediums größer, liefert damit auch wieder einen größeren Beitrag zum Messsignal.

Es ist darauf zu achten, dass mit einer größeren Wartezeit - wobei damit eine Wartezeit größer als $t_W = L_1/v_{Gas}$ gemeint ist - der durch das erfindungsgemäße Verfahren generierte Effekt, nämlich die "Verstärkung des von dem gasförmigen Medium erzeugten Anteil am Messsignal", verkleinert wird. Strömt mehr frisches flüssiges Medium in den Bereich der Spule, vergrößert sich der Beitrag des flüssigen Mediums zum Messsignal, so lange, bis letztendlich der ursprüngliche Zustand wieder hergestellt ist, also die gesamte Spule wieder mit frischem gasförmigen und frischem flüssigen Medium gefüllt ist und das Messsignal durch die flüssige Phase dominiert wird. Eine geeignete Wahl der Wartezeit $t_W$ ist also unabdingbar.

Eine besonders bevorzugte Ausführungsform des erfindungsgemäßen Verfahrens ist dadurch gekennzeichnet, dass die Wartezeit $t_W$ iterativ anhand des Signalamplitudenverhältnisses $S_{Gas} / S_{flüssig}$ und der Signalamplitude $S_{Gas}$ der gasförmigen Phase bestimmt wird, wobei das Signalamplitudenverhältnis und die Signalamplitude der gasförmigen Phase maximal sind für $t_W = L_1 / v_{Gas}$.

Wie bereits oben ausgeführt, ist es von absoluter Relevanz, einen geeigneten Wert für die Wartezeit $t_W$ zwischen der Zerstörung der Magnetisierung in Richtung des Magnetfeldes und dem Start der kernmagnetischen Messung einzuhalten. Wenn hier ausgeführt wird, einen geeigneten Wert einzuhalten, dann ist damit gemeint, einen Wert für die Wartezeit $t_W$ zu verwenden, nach dem sich so viel "frisches" gasförmiges Medium wie möglich und so wenig "frisches" flüssiges Medium wie möglich in dem Bereich der spulenförmig ausgebildeten Antenne befindet. Ein Indiz für diesen Zustand ist der Wert des Signalamplitudenverhältnisses $S_{Gas} / S_{flüssig}$ in Kombination mit dem Wert der Signalamplitude $S_{Gas}$ der gasförmigen Phase. Die Signalamplitude der gasförmigen Phase weist einen maximalen Wert auf, wenn der sich in der spulenförmig ausgebildeten Antenne befindliche gasförmige Anteil vollständig aus "frischem" Medium besteht. Dies ist der Fall für eine Wartezeit größer oder gleich $L_1 / v_{Gas}$. Für kleinere Wartezeiten weist die Signalamplitude der gasförmigen Phase einen mit der Zeit steigenden Wert auf. Das Signalamplitudenverhältnis $S_{Gas} / S_{flüssig}$ weist für eine Wartezeit $t_W = L_1 / v_{Gas}$ einen maximalen Wert auf, mit zunehmender Wartezeit sinkt der Wert. Der Zeitpunkt, zu dem also sowohl das Signalamplitudenverhältnis als auch die Signalamplitude der gasförmigen Phase maximal sind, entspricht dem optimalen Wert für die Wartezeit $t_W$ und ist $t_W = L_1 / v_{Gas}$.

In einem iterativen Verfahren kann beispielsweise zunächst angenommen werden, dass die gasförmige Phase doppelt so schnell strömt, wie die flüssige Phase, also dass $v_{Gas} = 2 v_{flüssig} = 2 v_{bulk}$ ist. Damit ergibt sich die Wartezeit zunächst zu $t_W = L_1 / 2 v_{bulk}$. Nach dieser Wartezeit kann eine kernmagnetische Messung durchgeführt und anhand der Messdaten die Signalamplituden für die schnelle gasförmige und die langsame flüssige Phase bestimmt werden. Aus der so bestimmten Signalamplitude der gasförmigen Phase lässt sich ein genauerer Wert für die Strömungsgeschwindigkeit der gasförmigen Phase $v_{Gas}$ ermitteln, die dann zur Bestimmung einer "neuen" Wartezeit verwendet werden kann. Nach der "neuen" Wartezeit kann eine nächste kernmagnetische Messung durchgeführt und anhand der Messdaten wieder die Signalamplituden der jeweiligen Phasen sowie die Strömungsgeschwindigkeit der gasförmigen Phase genauer bestimmt werden. Dieses iterative Verfahren wird vorzugsweise so lange angewendet, bis sich ein konstanter Wert für $t_W$ ergibt, der daraus resultiert, dass die optimale Wartezeit gefunden worden ist.

Eine wiederum bevorzugte Ausführungsform des erfindungsgemäßen Verfahrens ist dadurch gekennzeichnet, dass aus den bei der kernmagnetischen Messung gewonnenen Messwerten die Strömungsgeschwindigkeiten der einzelnen Phasen bestimmt werden.

Wenn zuvor ausgeführt worden ist, dass in einem iterativen Verfahren bereits die Strömungsgeschwindigkeiten der einzelnen Phasen, insbesondere der gasförmigen Phase bestimmt worden ist, um einen geeigneten Wert für die Wartezeit $t_W$ festlegen zu können, dann ist nun zu berücksichtigen, dass die vorher bestimmten Strömungsgeschwindigkeiten nicht zwangsläufig der "realen" Strömungsgeschwindigkeit entsprachen, vielmehr sich der "realen" Strömungsgeschwindigkeit iterativ angenähert haben. Wenn nun davon gesprochen wird, dass aus den Messwerten die Strömungsgeschwindigkeiten der einzelnen Phasen bestimmt werden, bedeutet dies, dass die "realen" Strömungsgeschwindigkeiten sowohl der gasförmigen als auch der flüssigen Phase bestimmt werden, da ein optimaler Wert für die Wartezeit $t_W$ verwendet wird. Insbesondere kann vorgesehen sein, dass die Strömungsgeschwindigkeiten der einzelnen Phasen durch geeignetes Anfitten der aufgenommenen Messdaten ermittelt werden.

Eine besonders bevorzugte Ausführungsform des erfindungsgemäßen Verfahrens ist dadurch gekennzeichnet, dass aus dem Signalamplitudenverhältnis $S_{flüssig}$ / $S_{Gas}$ die Anteile der einzelnen Phasen am Medium bestimmt werden.

Wenn vorliegend davon gesprochen wird, dass die Anteile der einzelnen Phasen bestimmt werden, dann sind damit die relativen Anteile $\alpha$ der einzelnen Phasen an dem Medium gemeint. Das Signalverhältnis ist gegeben durch

$$\frac{S_{flüssig}}{S_{Gas}} = \frac{(\alpha HI)_{flüssig}}{(\alpha HI)_{Gas}} \frac{\min\left(1, \dfrac{v_{flüssig} t_W}{L_1}\right)}{\min\left(1, \dfrac{v_{Gas} t_W}{L_1}\right)} = S_0 F\left(v_{flüssig}, v_{Gas}, t_W\right)$$

wobei *HI* der Wasserstoffindex der jeweiligen Phase, $\alpha$ der relative Anteil der jeweiligen Phase am Medium, v die Strömungsgeschwindigkeit, $t_W$ die Zeit ist, die zwischen Zerstörungspuls und Start der Messung gewartet wird und $L_1$ die Länge der spulenförmigen Antenne ist.

Der Ausdruck $v_x\, t_W$ / $L_1$ gibt dabei den relativen Anteil frischen Mediums in der spulenförmig ausgebildeten Antenne an, wobei *x* für *"flüssig"* oder *"Gas"* stehen kann, demnach also den relativen Anteil frischen flüssigen Mediums bezeichnet, oder den relativen Anteil frischen gasförmigen Mediums bezeichnet. Der Ausdruck

$$\min\left(1, \frac{v_x t_W}{L_1}\right)$$

bedeutet, dass für Wartezeiten $t_W$, nach denen noch nicht der gesamte Bereich der spulenförmig ausgebildeten Antenne mit frischem Medium gefüllt ist, der relative Anteil bestimmt ist durch $v_x t_W/L_1$. Für längere Wartezeiten ist der gesamte Bereich der spulenförmig ausgebildeten Antenne mit frischem Medium gefüllt, der relative Anteil beträgt also 1.

Eine weitere bevorzugte Ausführungsform des erfindungsgemäßen Verfahrens ist dadurch gekennzeichnet, dass die kernmagnetische Messung durch eine CPMG-Sequenz realisiert wird. Darüber hinaus ist jede im Bereich der Durchflussmessung anwendbare Messsequenz möglich.

**Patentansprüche**

1. Verfahren zum Betreiben eines kernmagnetischen Durchflussmessgerätes zur Bestimmung des Durchflusses eines durch ein Messrohr strömenden mehrphasigen Mediums, mit einer Vormagnetisierungseinrichtung zur Vormagnetisierung des Mediums, mit einer Magnetfelderzeugungseinrichtung zur Erzeugung eines das Medium durchsetzenden Magnetfeldes und mit einer Messeinrichtung,
wobei die Messeinrichtung mindestens eine zum Erzeugen von das Medium anregenden Anregungssignalen und/oder zum Detektieren von vom Medium ausgesandten Messsignalen ausgestaltete spulenförmig ausgebildete Antenne umfasst,
wobei von der spulenförmig ausgebildeten Antenne ein die Magnetisierung zumindest in Richtung des Magnetfeldes zerstörender Puls oder eine die Magnetisierung in Richtung des Magnetfeldes zerstörende Pulssequenz ausgesendet wird,
wobei eine Wartezeit $t_W$ gewartet wird,
wobei dann eine kernmagnetische Messung durchgeführt wird, indem das Medium durch die spulenförmig ausgebildete Antenne mit Anregungspulsen angeregt wird und die durch die Anregung im Medium erzeugten Messsignale detektiert werden, **dadurch gekennzeichnet, dass** die Wartezeit $t_W$ gegeben ist durch

$$t_W \geq \frac{L_1}{v_{Gas}}$$

wobei $L_1$ die Länge der spulenförmig ausgebildeten Antenne und $v_{Gas}$ die Strömungsgeschwindigkeit der gasförmigen Phase sind.

2. Verfahren nach Anspruch 1, **dadurch gekennzeichnet, dass** der Puls oder die Pulssequenz in Kombination mit einem Dephasierungsgradienten ausgesendet wird.

3. Verfahren nach Anspruch 1 oder 2, **dadurch gekennzeichnet, dass** der die Magnetisierung zerstörende Puls durch einen P90-Puls realisiert wird.

4. Verfahren nach Anspruch 3, **dadurch gekennzeichnet, dass** der P90-Puls von einem Dephasierungsgradientenpuls gefolgt wird.

5. Verfahren nach einem der Ansprüche 1 bis 4, **dadurch gekennzeichnet, dass** die Wartezeit $t_W$ iterativ anhand des Signalamplitudenverhältnisses $S_{Gas}$ / $S_{flüssig}$ und der Signalamplitude $S_{Gas}$ der gasförmigen Phase bestimmt wird, wobei das Signalamplitudenverhältnis und die Signalamplitude der gasförmigen Phase maximal sind für

$$t_W = \frac{L_1}{v_{Gas}}$$

6. Verfahren nach einem der Ansprüche 1 bis 5, **dadurch gekennzeichnet, dass** aus den bei der kernmagnetischen Messung gewonnenen Messwerten die Strömungsgeschwindigkeiten der einzelnen Phasen bestimmt werden.

7. Verfahren nach Anspruch 6, **dadurch gekennzeichnet, dass** aus dem Signalamplitudenverhältnis $S_{flüssig}/S_{Gas}$ die Anteile der einzelnen Phasen am Medium bestimmt werden.

8. Verfahren nach einem der Ansprüche 1 bis 7, **dadurch gekennzeichnet, dass** die kernmagnetische Messung durch eine CPMG-Sequenz realisiert wird.

**Claims**

1. Method for operating a nuclear magnetic flowmeter for determining the flow of a multi-phase medium flowing through a measuring tube, comprising a pre-magnetization device for pre-magnetizing the medium, a magnetic field generating device for generating a magnetic field penetrating the medium and a measuring device,
wherein the measuring device comprises at least one coil-shaped antenna designed to generate excitation signals that excite the medium and/or to detect measurement signals emitted by the medium,
wherein a pulse spoiling the magnetization at least in the direction of the magnetic field or a pulse sequence spoiling the magnetization in the direction of the magnetic field is emitted from the coil-shaped antenna,
where a wait time $t_W$ is waited,
wherein a nuclear magnetic measurement is then performed by exciting the medium with excitation pulses through the coil-shaped antenna and detecting the measurement signals generated in the medium by the excitation,
**characterized in that** the waiting time $t_W$ is given by

$$t_W \geq \frac{L_1}{v_{Gas}}$$

where $L_1$ is the length of the coil-shaped antenna and $v_{Gas}$ is the flow velocity of the gaseous phase.

2. Method according to claim 1, **characterized in that** the pulse or pulse sequence is emitted in combination with a dephasing gradient.

3. Method according to claim 1 or 2, **characterized in that** the pulse destroying the magnetization is implemented by a P90 pulse.

4. Method according to claim 3, **characterized in that** the P90 pulse is followed by a dephasing gradient pulse.

5. Method according to any one of claims 1 to 4, **characterized in that** the waiting time $t_W$ is determined iteratively on the basis of the signal amplitude ratio $S_{Gas} / S_{flüssig}$ and the signal amplitude $S_{Gas}$ of the gaseous phase, wherein the signal amplitude ratio and the signal amplitude of the gaseous phase are maximum for

$$t_W = \frac{L_1}{v_{Gas}}$$

6. Method according to any one of claims 1 to 5, **characterized in that** the flow velocities of the individual phases are determined from the measured values obtained during nuclear magnetic measurement.

7. Method according to claim 6, **characterized in that** the proportions of the individual phases in the medium are determined from the signal amplitude ratio $S_{flüssig}/S_{Gas}$.

8. Method according to one of claims 1 to 7, **characterized in that** the nuclear magnetic measurement is implemented by a CPMG sequence.

**Revendications**

1. Procédé pour faire fonctionner un débitmètre magnétique nucléaire destiné à déterminer le débit d'un fluide multiphasé qui s'écoule à travers un tube de mesure, comprenant un dispositif de prémagnétisation destiné à prémagnétiser le fluide, comprenant un dispositif de génération de champ magnétique destiné à générer un champ magnétique qui traverse le fluide et comprenant un dispositif de mesure,
le dispositif de mesure comportant au moins une antenne réalisée en forme de bobine, configurée pour générer des signaux d'excitation qui excitent le fluide et/ou pour détecter des signaux de mesure émis depuis le fluide, une impulsion qui détériore la magnétisation au moins dans la direction du champ magnétique ou une séquence d'impulsions qui détériore la magnétisation dans la direction du champ magnétique étant émise par l'antenne réalisée en forme de bobine,
une attente ayant lieu pendant un temps d'attente $t_W$,
une mesure magnétique nucléaire étant ensuite effectuée en excitant le fluide par l'antenne réalisée en forme de bobine avec des impulsions d'excitation et en détectant les signaux de mesure générés par l'excitation dans le fluide,
**caractérisé en ce que**
le temps d'attente $t_W$ est donné par

$$t_W \geq \frac{L_1}{v_{Gas}}$$

où $L_1$ désigne la longueur de l'antenne réalisée en forme de bobine et $v_{Gas}$ la vitesse d'écoulement de la phase gazeuse.

2. Procédé selon la revendication 1, **caractérisé en ce que** l'impulsion ou la séquence d'impulsions est émise en combinaison avec un gradient de déphasage.

3. Procédé selon la revendication 1 ou 2, **caractérisé en ce que** l'impulsion qui détériore la magnétisation est réalisée avec une impulsion P90.

4. Procédé selon la revendication 3, **caractérisé en ce que** l'impulsion P90 est suivie par une impulsion de gradient de déphasage.

5. Procédé selon l'une des revendications 1 à 4, **caractérisé en ce que** le temps d'attente $t_W$ est déterminé de manière itérative à l'aide du rapport d'amplitudes de signal $S_{Gas}/S_{flüssig}$ et de l'amplitude de signal $S_{Gas}$ de la phase gazeuse, le rapport d'amplitudes de signal et l'amplitude de signal de la phase gazeuse étant au maximum pour

$$t_W = \frac{L_1}{v_{Gas}}.$$

6. Procédé selon l'une des revendications 1 à 5, **caractérisé en ce que** les vitesses d'écoulement des phases individuelles sont déterminées à partir des valeurs mesurées obtenues lors de la mesure magnétique nucléaire.

7. Procédé selon la revendication 6, **caractérisé en ce que** les parts de chacune des phases au niveau du fluide sont déterminées à partir du rapport d'amplitudes de signal $S_{flüssig}/S_{Gas}$.

8. Procédé selon l'une des revendications 1 à 7, **caractérisé en ce que** la mesure magnétique nucléaire est réalisée par une séquence CPMG.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2008174313 A1